# EUROPÄISCHE PATENTSCHRIFT

(11) **EP 0 714 804 B1**
(45) Veröffentlichungstag und Bekanntmachung des Hinweises auf die Patenterteilung: **20.05.1998**
(21) Anmeldenummer: 95118406.8
(22) Anmeldetag: 23.11.1995
(51) Int. Cl.: B60K 31/08

(54) **Geschwindigkeitsregler für ein Kraftfahrzeug**
Cruise control for a motor vehicle
Régulateur de vitesse pour un véhicule automobile

(30) Priorität: 02.12.1994 DE 4442971
(43) Veröffentlichungstag der Anmeldung: 05.06.1996
(73) Patentinhaber: Hella KG Hueck & Co., 59552 Lippstadt (DE)
(72) Erfinder: Schäffer, Martin, D-33397 Rietberg-Mastholte (DE); Schiewer, Norbert, D-59555 Lippstadt (DE)

(56) Entgegenhaltungen:
- US-A- 4 559 864
- PATENT ABSTRACTS OF JAPAN vol. 009 no. 176 (M-398) ,20.Juli 1985 & JP-A-60 045433 (NISSAN JIDOSHA KK) 11.März 1985,

## Beschreibung

Die Erfindung betrifft einen Geschwindigkeitsregler für ein Kraftfahrzeug, mit einem pneumatischen Stellelement, das mechanisch mit einem geschwindigkeitsbestimmenden Einstellelement eines Kraftfahrzeugmotors verbunden ist, mit elektrisch steuerbaren Magnetventilen zur Belüftung des pneumatischen Stellelementes, mit einer Unterdruckpumpe zur Erzeugung eines Unterdrucks zur Betätigung des pneumatischen Stellelementes, mit einer Steuerelektronik zur Ansteuerung der Magnetventile und des Motors der Unterdruckpumpe.

Solche Geschwindigkeitsregler haben die Aufgabe, die Geschwindigkeit eines Kraftfahrzeuges, insbesondere auf einen vorgegebenen Wert, zu halten sowie Geschwindigkeitsänderungen automatisch ablaufen zu lassen. Hierzu ist ein pneumatisches Stellelement mit einem die Geschwindigkeit des Kraftfahrzeuges beeinflussenden Stellelement (zum Beispiel dem Fahrpedal oder der Drosselklappe) mechanisch verbunden und wirkt auf dieses regelnd ein.

Ein solcher Geschwindigkeitsregler ist aus mehreren Komponenten zusammengefügt, zwischen denen elektrische, pneumatische und mechanische Verbindungen bestehen.

Beim Aufbau von Geschwindigkeitsreglern wird ein möglichst einfacher, kostengünstiger und kompakter Aufbau angestrebt. Dabei sollen die elektrischen, pneumatischen und mechanischen Verbindungen zwischen den Komponenten möglichst kurz und von der Anzahl her klein sein.

Aus der DE 37 37 436 C2 ist eine Anordnung bekannt, bei der die Steuerschaltung eines Geschwindigkeitsreglers an eine Außenfläche des Gehäuses des pneumatischen Stellelementes angeordnet ist. In diese Baueinheit integriert sind Magnetventile zur Steuerung des pneumatischen Stellgliedes. Ziel dieser Anordnung ist es insbesondere, die "Verdrahtungskapazität" (Länge und Anzahl der benötigten Leitungen) zu verringern.

Der konstruktive (Material- und Montage-) Aufwand ist bei dieser Anordnung relativ hoch, da elektrische Verbindungsleitungen zu den Magnetventilen in das Innere des Gehäuses des pneumatischen Stellgliedes geführt werden müssen.

Weiterhin wird ein zusätzliches Gehäuseelement zur Abdeckung der Steuerschaltung benötigt, um die Steuerschaltung gegen schädigende Einwirkungen zu schützen. Es erscheint daher konstruktiv günstiger, die Steuerelektronik innerhalb des Gehäuses anzuordnen. Hierbei ergibt sich aber das Problem, daß die Steuerelektronik durch die Betätigung des pneumatischen Stellelementes, welche auch Feuchtigkeit oder Schadstoffen, die zusammen mit der Umgebungsluft in das Gehäuseinnere geführt werden, ausgesetzt ist, welche schädigend auf die Steuerelektronik einwirken können.

In der EP-A-0 508 286 wird vorgeschlagen, Elektronikbauteile auf einem Elektronikträger zum Schutz gegen Feuchtigkeit mit einer Metall- oder Kunststoffolie zu umgeben, und zwar derart, daß sie an einem umlaufenden Rand, der von einer den Elektronikträger tragenden Metallplatte gebildet wird, luft- und wasserdicht abschließt.

Weiterhin wird vorgeschlagen, daß zur besseren Anpassung der Folie an das sich bei Temperaturänderung ändernde Volumen des von der Folie eingeschlossenen Luftraumes, diese Folie Einprägungen aufweist.

Es erscheint zumindest problematisch, eine durch eine Folie druckdicht abgeschlossene Steuerelektronik mit elektrischen Zuleitungen zu verbinden.

Es stellte sich daher die Aufgabe, einen Geschwindigkeitsregler zu schaffen, der möglichst einfach, kostengünstig und kompakt aufgebaut ist und bei dem die aufgeführten Nachteile vermieden werden.

Diese Aufgabe wird erfindungsgemäß dadurch gelöst, daß die Magnetventile und die Steuerelektronik innerhalb eines gemeinsamen Gehäuses angeordnet sind und daß eine durch das gemeinsame Gehäuse ausgebildete Kammer durch ein Gummiformteil geteilt ist und die Magnetventile in einem ersten Teil der Kammer und die Steuerelektronik in einem zweiten Teil der Kammer angeordnet sind.

Bei dem erfindungsgemäßen Geschwindigkeitsregler wird ein besonders einfacher und kostengünstiger Aufbau dadurch erzielt, daß die Steuerelektronik zusammen mit den Magnetventilen innerhalb eines gemeinsamen Gehäuses angeordnet ist. Hierdurch kann die Verbindung der Steuerelektronik mit den übrigen Elementen des Geschwindigkeitsreglers, sowohl was die mechanische Anordnung als auch die elektrischen Verbindungen, zum Beispiel zu den Magnetventilen, betrifft, besonders einfach ausgeführt werden.

Hierbei ist ebenfalls vorteilhaft, daß Gehäuseteile, die sonst zur Einfassung der Steuerelektronik benötigt werden, eingespart werden können. Hierdurch wird beim erfindungsgemäßen Geschwindigkeitsregler gleichzeitig eine Verringerung an Volumen und Gewicht erzielt.

Bei einer Anordnung der Steuerelektronik innerhalb einer durch das gemeinsame Gehäuse ausgebildeten Kammer muß allerdings die Steuerelektronik vor schädigenden Einflüssen geschützt werden. Hierzu ist es vorteilhaft, daß bei dem erfindungsgemäßen Geschwindigkeitsregler die durch das gemeinsame Gehäuse im Inneren ausgebildete Kammer durch ein Gummiformteil geteilt ist und die Magnetventile in einem ersten Teil der Kammer und die Steuerelektronik in einem zweiten Teil der Kammer angeordnet sind. Hierdurch kann die Steuerelektronik auf einfache Weise innerhalb derselben Kammer des Gehäuses angeordnet sein, ohne daß bei Betätigung des pneumatischen Stellelementes Feuchtigkeit oder Schadstoffe, die zusammen mit der Umgebungsluft in die Kammer geführt werden, schädigend auf die Steuerelektronik einwirken können.

Weitere vorteilhafte Ausgestaltungen und Weiterbildungen des erfindungsgemäßen Geschwindigkeitsreglers gehen aus den Unteransprüchen hervor.

So ist es vorteilhaft, wenn das Gummiformteil druckdichte Durchführungen für Kontaktstifte aufweist. Über diese Kontaktstifte können auf einfache Weise elektrische Verbindungen von der Steuerelektronik und zu der Steuerelektronik geführt werden, ohne daß die abdichtende und damit die die Steuerelektronik schützende Eigenschaft des Gummiformteils beeinträchtigt wird.

Besonders vorteilhaft ist es, wenn Randabschnitte des Gummiformteils im Verbindungsbereich von miteinander verrasteten Gehäuseteilen kraft- oder vorzugsweise formschlüssig gehalten werden. Hierdurch wird das Gummiformteil besonders sicher gehalten und erfüllt dabei gleichzeitig die Funktion einer Dichtung, so daß eine zusätzliche Dichtung an diesen Stellen eingespart werden kann.

Besonders günstig ist es, wenn das Gummiformteil Faltungen ähnlich einem Faltenbalg aufweist, da sich hierdurch das Luftvolumen in dem zweiten Teil der Kammer, etwa bei Erwärmung durch die Bauteile der Steuerelektronik, ausdehnen kann. Hierdurch wird ein Aus- und Einströmen von Luft und damit ein Eindringen von Verunreinigungen und Feuchtigkeit in den zweiten Teil der Kammer wirkungsvoll vermieden.

In diesem Zusammenhang ist es besonders vorteilhaft, das Gummiformteil so auszugestalten, daß sich die Faltungen mäanderförmig in zwei zueinander entgegengesetzten Richtungen senkrecht zu einem Flächenabschnitt des Gummiformteils erstrecken. Hierdurch kann sich vorteilhafterweise der Luftdruck im zweiten Teil der Kammer durch Aufkrempelung der Faltungen des Gummiformteils entweder in der einen oder der anderen Richtung an den im ersten Teil der Kammer herrschenden Druck angleichen.

Ebenfalls vorteilhaft ist es, die Unterdruckpumpe (3) ebenfalls im ersten Teil der Kammer (11) anzuordnen. Hierdurch können die elektrischen, mechanischen und pneumatischen Verbindungen zwischen der Unterdruckpumpe, den Magnetventilen und der Steuerelektronik sehr kurz gehalten bzw. ganz eingespart werden, zum Beispiel über elektrische Verbindungen, die über die Platine der Steuerelektronik geführt werden oder durch pneumatische Verbindungen, die durch in das Gehäuse eingeformte Kanäle ausgebildet werden.

Weiterhin kann vorgesehen werden, daß das Gehäuse des pneumatischen Stellelements mit dem gemeinsamen Gehäuse beispielsweise durch Verrastung mechanisch und auch druckleitend verbunden ist. Damit bildet das pneumatische Stellelement eine Baueinheit mit dem gemeinsamen Gehäuse, wodurch die kompakteste Bauform eines erfindungsgemäßen Geschwindigkeitsreglers realisiert ist.

Vorteilhafterweise kann auch vorgesehen werden, daß auch die übrigen Gehäuseteile miteinander verrastbar sind. Wird zudem vorgesehen, die elektrischen Verbindungen zur Steuerelektronik über Steckverbindungen herzustellen, so ist der gesamte erfindungsgemäße Geschwindigkeitsregler in aufbauender Montage und damit besonders kostengünstig herstellbar. Dabei ist ebenfalls vorteilhaft, daß der erfindungsgemäße Geschwindigkeitsregler vor Einbau in ein Kraftfahrzeug weitestgehend vormontiert werden kann, da nahezu alle elektrischen, pneumatischen und mechanischen Verbindungen innerhalb des gemeinsamen Gehäuses angeordnet sind. Hierdurch ist der erfindungsgemäße Geschwindigkeitsregler bei Einbau in das Kraftfahrzeug besonders montagefreundlich.

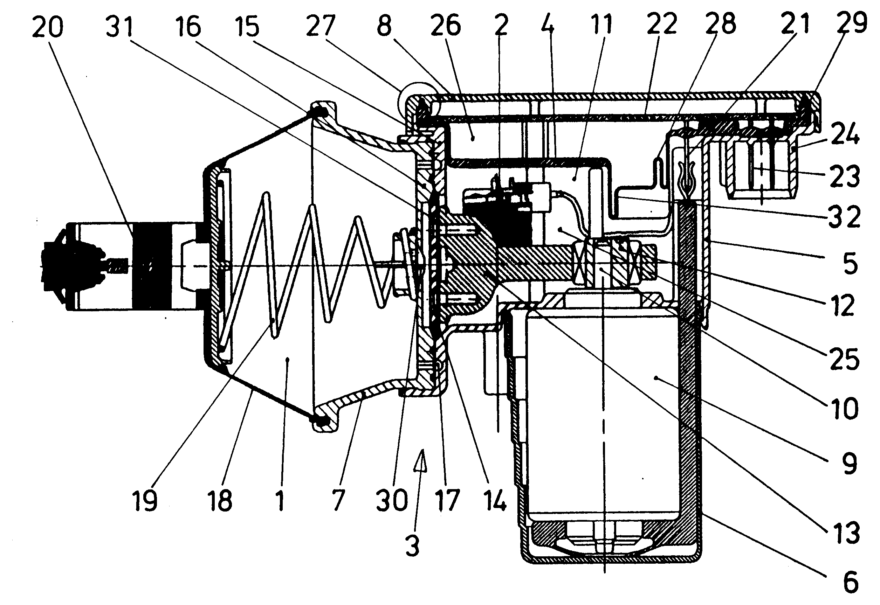

Ein Ausführungsbeispiel des erfindungsgemäßen Geschwindigkeitsreglers ist in der Zeichnung dargestellt und soll im folgenden anhand der Zeichnung näher erläutert werden.

Die einzige Figur zeigt eine Schnittzeichnung eines erfindungsgemäßen Geschwindigkeitsreglers.

Die Figur zeigt eine Schnittzeichnung durch eine bevorzugte Ausführungsform eines erfindungsgemäßen Geschwindigkeitsreglers, bei dem sämtliche für die Funktion des Geschwindigkeitsreglers relevanten Komponenten eine Baueinheit ausbilden. Baueinheit meint hier, daß alle Komponenten innerhalb eines gemeinsamen Gehäuses angeordnet sind, wobei das Gehäuse selbst durchaus aus mehreren Gehäuseteilen zusammengefügt sein kann. Die nachfolgend beschriebene Baueinheit kann vorteilhafterweise aufbauend montiert werden.

So besteht das dargestellte gemeinsame Gehäuse aus einem ersten Gehäuseteil (5), einem Motorgehäuseteil (6), einem Stellelementgehäuseteil (7) und einem Gehäusedeckel (8), die vorzugsweise über Rastverbindungen zusammengefügt sind.

Innerhalb des anrastbaren Motorgehäuseteils (6) sitzt ein Elektromotor (9), dessen Antriebswelle (10) in eine Kammer (11) des ersten Gehäuseteils (5) hineinreicht. Mit der Antriebswelle (10) des Elektromotors (9) ist über einen Exzenter (12) eine Pleuelstange (13) verbunden, welche an ihrem entgegengesetzt liegenden Endabschnitt mit einer Membran (14) verbunden ist, die eine Öffnung in einer Wandung (15) des ersten Gehäuseteiles (5) abschließt. Weiterhin besitzt die Membran (14) die Funktion eines Flatterventils.

An die Wandung (15) des ersten Gehäuseteiles (5) fügt sich eine Wandung (16) des Stellelementgehäuseteils (7) an, wobei das Stellelementgehäuseteil (7) mit dem ersten Gehäuseteil (5) verrastet ist. Die Anordnung aus Elektromotor (9), Exzenter (12), Pleuelstange (13) und Membran (14) bildet zusammen mit einem Schirmventil (30) und einer Scheibe (31) eine als Membranpumpe ausgebildete Unterdruckpumpe (3) aus, welche Luft aus dem Inneren des pneumatischen Stellelements (1) pumpen kann. Das Stellelementgehäuseteil (7) wird durch ein flexibles als elastomere Membrane ausgebildetes Kunststoffteil (18) abgeschlossen. Dieses flexible Kunststoffteil (18) wird im Inneren des pneumatischen Stellelementes (1) durch eine Spiralfeder (19) vorgespannt und weist an seiner Außenseite ein Verbindungselement (20) auf, welches beispielsweise über einen nicht dargestellten Bowdenzug mit einem (ebenfalls nicht dargestellten) geschwindigkeitsbestimmenden Einstellelement des Kraftfahrzeuges (zum Beispiel Drosselklappe oder Fahrpedal) verbunden werden kann.

In der Kammer (11) des ersten Gehäuseteiles (5) sind außerdem zwei elektrisch steuerbare Magnetventile (2) angeordnet, von denen eines in der Schnittdarstellung der Figur erkennbar ist. Die Magnetventile (2) dienen zur Steuerung der Belüftung des pneumatischen Stellelementes (1). Hierzu sind die Magnetventile (2) vorzugsweise über in das Gehäuse eingeformte (in der Figur nicht dargestellte) Kanäle und einen Ringkanal (17) druckleitend mit dem Inneren des pneumatischen Stellelementes (1) verbunden.

Die elektrischen Anschlüsse des Elektromotors (9) und der Magnetventile (2) sind mit Kontaktstiften (21) der Leiterplatte verbunden, auf welcher die Steuerelektronik (22) angeordnet ist. Die die Steuerelektronik (22) ausbildenden elektrischen und elektronischen Bauelemente sind zwecks besserer Übersichtlichkeit in der Figur nicht dargestellt. Weitere Kontaktstifte (23) der Steuerelektronik (22) bilden die Anschlußelemente eines an das erste Gehäuseteil (5) angeformten Steckverbinders (24) aus.

Die Kammer (11) des ersten Gehäuseteiles (5) ist durch ein flexibles Gummiformteil (4) zweigeteilt, wobei in einem ersten Teil (25) die pneumatischen Komponenten, Unterdruckpumpe und Magnetventile, und in einem Teil der Kammer (11) die Steuerelektronik angeordnet sind.

Das flexible Gummiformteil (4) erfüllt dabei auf vorteilhafte Weise die Aufgabe, die Umgebungsluft von der Steuerelektronik (22) fernzuhalten. Bei dem sich wiederholenden Be- und Entlüften des pneumatischen Stellelementes (1) gelangt Umgebungsluft über eine nicht dargestellte Belüftungsöffnung in das erste Gehäuseteil (5). Diese Umgebungsluft kann mit Verunreinigungen und/oder Feuchtigkeit beladen sein, welche die Bauelemente der Steuerelektronik (22) schädigen können.

Das flexible Gummiformteil bildet somit eine flexible Wand der Kammer (11) des ersten Gehäuseteiles (5) aus und wird darüber hinaus im Verbindungsbereich (27) zwischen dem ersten Gehäuseteil (5) und der Leiterplatte der Steuerelektronik (22) bzw. dem ersten Gehäuseteil (5) und dem Gehäusedeckel (8) von den Gehäuseteilen (5, 8) formschlüssig gehalten und besitzt dort die Funktion einer Dichtung.

Vorteilhaft ist auch die abdichtende Wirkung des Gummiformteils (4) in den Bereichen, in denen Kontaktstifte (21, 23) durch das Gummiformteil (4) geführt sind.

Besonders vorteilhaft ist, daß sich das Gummiformteil (4) durch Formänderung temperaturbedingten, wechselnden Druckverhältnissen im zweiten Teil (26) der Kammer (11) anpassen kann, wodurch ein Eindringen von Umgebungsluft in den zweiten Teil (26) der Kammer (11) besonders wirkungsvoll verhindert wird. Hierzu weist das Gummiformteil (4) mäanderförmige Faltungen (28) auf, die sich in zwei zueinander entgegengesetzte Richtungen senkrecht zu einem Flächenabschnitt (32) des Gummiformteils (4) erstrecken. Damit sich die Faltungen (28) des Gummiformteils (4) besonders gut aufkrempeln können, ist der Flächenabschnitt (32) des Gummiformteils (4) dünner ausgeführt als andere Abschnitte des Gummiformteils (4).

Insgesamt wird durch den Einsatz des Gummiformteils (4) der integrierte Aufbau eines pneumatischen Geschwindigkeitsreglers wesentlich vereinfacht, da die Steuerelektronik (22) in das gleiche Gehäuse wie die pneumatischen Komponenten eingebaut werden kann.

Abschließend soll die Funktionsweise eines erfindungsgemäßen Geschwindigkeitsreglers anhand der Figur kurz erläutert werden.

Über elektrische Kontakte (23) erhält der Geschwindigkeitsregler Signale eines Geschwindigkeitssensors und von Sensoren, die mit dem Kupplungs- und dem Bremspedal verbunden sind und jeweils deren Betätigung signalisieren, und von Bediensignalen des Fahrers, mit denen dieser die Konstanthaltung einer Geschwindigkeit oder einer Beschleunigung oder einer Verzögerung anfordert sowie eine Versorgungsspannung zugeführt.

Die aus Elektromotor (9), Exzenter (12), Pleuelstange (13), Membran (14), Scheibe (31) und Schirmventil (30) bestehende Unterdruckpumpe (3) pumpt Luft aus dem Inneren des pneumatischen Stellelementes (1). Aufgrund der Signale des (nicht dargestellten) Geschwindigkeitssensors berechnet die Steuerelektronik (22) Ansteuersignale für die Magnetventile (2) und den Pumpenmotor. Im unangesteuerten Zustand belüften die Magnetventile (2) den Innenraum des pneumatischen Stellelementes (1). Der Innenraum des pneumatischen Stellelementes (1) steht dabei mit dem ersten Teil (25) der Kammer (11) in druckleitender Verbindung. Da der erste Teil (25) der Kammer (11) über eine in das erste Gehäuseteil (5) eingebrachte Belüftungsöffnung (in der Figur nicht dargestellt) mit dem äußeren Luftdruck in Verbindung steht, kann sich im Inneren des pneumatischen Stellelementes keine Unterdruck aufbauen. Bei Ansteuerung der Magnetventile (2) unterbleibt die Belüftung des pneumatischen Stellelementes (1), so daß die Unterdruckpumpe (3) im Inneren des pneumatischen Stellelementes (1) einen Unterdruck erzeugt.

Im Gleichgewicht zwischen dem äußeren Luftdruck mit dem inneren Luftdruck des pneumatischen Stellelementes und der Federkraft der Spiralfeder (19) auf das flexible Kunststoffteil (18) bringt das flexible Kunststoffteil (18) das Anschlußelement (22) und das damit verbundene geschwindigkeitsbestimmende Einstellelement des Kraftfahrzeugmotors in die durch die Steuerelektronik (22) vorgesehene Position.

Das zweite Magnetventil dient zur sicherheitshalben Schnellbelüftung des pneumatischen Stellelementes (1) in den Fällen, in denen der Fahrer das Brems- oder Kupplungspedal oder den Wählhebel eines Automatikgetriebes betätigt. Hierdurch wird schnellstmöglich Beeinflussung des geschwindigkeitsbestimmenden Einstellelementes des Kraftfahrzeugmotors durch den Geschwindigkeitsregler unterbunden.

Während der Be- und Entlüftungsphasen des pneumatischen Stellelementes (1) wird Umgebungsluft aus dem ersten Teil (25) der Kammer (11) hinaus bzw. in diesen hinein geführt.

Diese Luftbewegungen betreffen allerdings nicht (oder zumindest nicht wesentlich) das in dem zweiten Teil (26) der Kammer (11) enthaltene Luftvolumen, da dieses im wesentlichen druckdicht durch das Gummiformteil (4) gegenüber dem ersten Teil (25) der Kammer (11) abgeschottet ist.

Ändert sich bei Erwärmung oder Abkühlung der Bauelemente der Steuerelektronik das im zweiten Teil (25) der Kammer (11) eingeschlossene Luftvolumen, so reagiert das Gummiformteil mit einer Aufkrempelung seiner Faltungen (28) in Richtung auf den ersten bzw. zweiten Teil (25, 26) der Kammer (11). Die im zweiten Teil (26) der Kammer (11) eingeschlossene Luftmenge kann sich durch die Volumenänderung an den Druck in dem ersten Teil (25) der Kammer (11) anpassen, wodurch ein Austausch der im zweiten Teil (26) der Kammer (11) eingeschlossenen Luftmenge und ein damit verbundenes Eindringen von die Steuerelektronik (22) schädigenden Verunreinigungen und von Feuchtigkeit in den zweiten Teil (26) der Kammer (11) wirkungsvoll vermieden werden.

### Bezugszeichenliste

### Geschwindigkeitsregler für ein Kraftfahrzeug

- 1: pneumatisches Stellelement
- 2: Magnetventile
- 3: Unterdruckpumpe
- 4: Gummiformteil
- 5: erstes Gehäuseteil
- 6: Motorgehäuseteil
- 7: Stellelementgehäuseteil
- 8: Gehäusedeckel
- 9: Elektromotor
- 10: Antriebswelle
- 11: Kammer (im ersten Gehäuseteil (5))
- 12: Exzenter
- 13: Pleuelstange
- 14: Membran
- 15: Wandung (des ersten Gehäuseteils (5))
- 16: Wandung (des Stellelementgehäuseteil (7))
- 17: Ringkanal
- 1: 8 flexibles Kunststoffteil
- 19: Spiralfeder
- 20: Verbindungselement
- 21: Kontaktstifte
- 22: Steuerelektronik
- 23: Kontaktstifte
- 24: Steckverbinder
- 25: erster Teil der Kammer (11)
- 26: zweiter Teil der Kammer (11)
- 27: Verbindungsbereich
- 28: Faltungen (des Gummiformteils (4))
- 29: Randabschnitte (des Gummiformteils (4))
- 30: Schirmventil
- 31: Scheibe
- 32: Flächenabschnitt (des Gummiformteils (4))

## Patentansprüche

1. Geschwindigkeitsregler für ein Kraftfahrzeug mit einem pneumatischen Stellelement (1), das mechanisch mit einem geschwindigkeitsbestimmenden Einstellelement eines Kraftfahrzeugmotors verbunden ist, mit elektrisch steuerbaren Magnetventilen (2) zur Belüftung des pneumatischen Stellelementes (1), mit einer Unterdruckpumpe (3) zur Erzeugung eines Unterdrucks zur Betätigung des pneumatischen Stellelementes (1), mit einer Steuerelektronik (22) zur Ansteuerung der Magnetventile (2) und des Motors (9) der Unterdruckpumpe (3), dadurch gekennzeichnet, daß die Magnetventile (2) und die Steuerelektronik (22) innerhalb eines gemeinsamen Gehäuses angeordnet sind und daß eine durch das gemeinsame Gehäuse ausgebildete Kammer (11) durch ein Gummiformteil (4) geteilt ist und die Magnetventile (2) in einem ersten Teil (25) der Kammer (11) und die Steuerelektronik (22) in einem zweiten Teil (26) der Kammer (11) angeordnet sind.

2. Geschwindigkeitsregler nach Anspruch 1, dadurch gekennzeichnet, daß das Gummiformteil (4) druckdichte Durchführungen für Kontaktstifte (21, 23) zur Herstellung elektrischer Verbindungen zur Steuerelektronik (22) aufweist.

3. Geschwindigkeitsregler nach Anspruch 1, dadurch gekennzeichnet, daß das Gummiformteil (4) Faltungen (28) aufweist.

4. Geschwindigkeitsregler nach Anspruch 3, dadurch gekennzeichnet, daß sich die Faltungen (28) mäanderförmig in zwei zueinander entgegengesetzten Richtungen senkrecht zu einem Flächenabschnitt (32) des Gummiformteils (4) erstrecken.

5. Geschwindigkeitsregler nach Anspruch 1, dadurch gekennzeichnet, daß die Unterdruckpumpe (3) im ersten Teil (25) der Kammer (11) angeordnet ist.

6. Geschwindigkeitsregler nach Anspruch 1, dadurch gekennzeichnet, daß das gemeinsame Gehäuse aus mehreren miteinander verrasteten Gehäuseteilen (5, 6, 8) besteht.

7. Geschwindigkeitsregler nach Anspruch 6, dadurch gekennzeichnet, daß Randabschnitte (29) des Gummiformteils (4) von miteinander verrasteten Gehäuseteilen formschlüssig gehalten werden.

8. Geschwindigkeitsregler nach Anspruch 1 oder 6, dadurch gekennzeichnet, daß ein Gehäuseteil (7) des pneumatischen Stellelementes (1) ebenfalls mit den Gehäuseteilen (5, 6, 8) des gemeinsamen Gehäuses verrastet ist.

## Claims

1. Speed regulator for a motor vehicle, having a pneumatic adjustment means (1) which is connected to a speed determining setting means of a motor vehicle engine, having electrically controllable solenoid valves (2) for venting the pneumatic adjustment means (1), having a vacuum pump (3) to produce low pressure for operating the pneumatic adjustment means (1), having an electronic control assembly (22) for controlling the solenoid valves (2) and the motor (9) of the vacuum pump (3), characterised in that the solenoid valves (2) and the electronic control assembly (22) are arranged within a common housing and in that a chamber (11) formed by the common housing is divided by a rubber moulding (4) and the solenoid valves (2) are arranged in a first part (25) and the electronic control assembly (22) in a second part (26) of the chamber (11).

2. Speed regulator according to claim 1, characterised in that the rubber moulding (4) has pressure tight passages for contact pins (21, 23) to make electrical connections with the electronic control assembly (22).

3. Speed regulator according to claim 1, characterised in that the rubber moulding (4) has convolutions (28).

4. Speed regulator according to claim 3, characterised in that the convolutions (28) extend in square wave form in two mutually opposite directions perpendicularly with respect to a planar section (32) of the rubber moulding (4).

5. Speed regulator according to claim 1, characterised in that the vacuum pump (3) is arranged in the first part (25) of the chamber (11).

6. Speed regulator according to claim 1, characterised in that the common housing consists of a plurality of housing parts (5, 6, 8) that are latched to each other.

7. Speed regulator according to claim 6, characterised in that rim sections (29) of the rubber moulding (4) are held with positive engagement by housing parts that are latched to each other.

8. Speed regulator according to claim 1 or 6, characterised in that a housing part (7) of the pneumatic adjustment means (1) is likewise latched to the housing parts (5, 6, 8) of the common housing.

## Revendications

1. Régulateur de vitesse pour un véhicule à moteur, avec un élément de réglage pneumatique (1), lequel est relié mécaniquement avec un élément qui détermine la vitesse d'un moteur de véhicule, avec des soupapes magnétiques (2) commandées électriquement pour l'alimentation en air de l'élément de réglage pneumatique (1), avec une pompe à vide pour la production d'un vide destiné à actionner l'élément de réglage pneumatique (1), avec une électronique de commande (22) pour commander les soupapes magnétiques (2) et le moteur (9) de la pompe à vide, caractérisé en ce que les soupapes magnétiques (2) et l'unité électronique de commande (22) sont disposées à l'intérieur d'un boîtier commun, en ce qu'une chambre (11) formée par le boîtier commun est partagée par une pièce en caoutchouc (4), et en ce que les soupapes magnétiques (2) sont disposées dans une première partie (25) de la chambre (11) et l'unité électronique de commande (22) dans une seconde partie (26) de la chambre (11).

2. Régulateur de vitesse selon la revendication 1, caractérisé en ce que la pièce en caoutchouc (4) présente des traversées étanches pour des broches de contact (21, 23), afin de réaliser des connections électriques avec l'unité électronique de commande (22).

3. Régulateur de vitesse selon la revendication 1, caractérisé en ce que la pièce en caoutchouc (4) présente des plis (28).

4. Régulateur de vitesse selon la revendication 3, caractérisé en ce que les plis (28) s'étendent en forme de méandres dans deux sens opposés l'un à l'autre, perpendiculairement à une section de surface (32) de la pièce en caoutchouc (4).

5. Régulateur de vitesse selon la revendication 1, caractérisé en ce que la pompe à vide (3) est disposée dans la première partie (25) de la chambre (11).

6. Régulateur de vitesse selon la revendication 1, caractérisé en ce que le boîtier commun se compose de plusieurs pièces de boîtier (5, 6, 8) enclenchées les unes avec les autres.

7. Régulateur de vitesse selon la revendication 6, caractérisé en ce que les bords (29) de la pièce en caoutchouc (4) sont maintenus par des pièces de boîtier enclenchées l'une avec l'autre à coopération de formes.

8. Régulateur de vitesse selon l'une ou l'autre des revendications 1 et 6, caractérisé en ce qu'une pièce de boîtier (7) de l'élément de réglage pneumatique (1) est également enclenchée avec les pièces de boîtier (5, 6, 8) du boîtier commun.
